# NEUE EUROPÄISCHE PATENTSCHRIFT

(11) **EP 3 353 452 B2**
(45) Veröffentlichungstag und Bekanntmachung des Hinweises auf die Entscheidung über den Einspruch: **03.01.2024**
(45) Hinweis auf die Patenterteilung: 03.06.2020
(21) Anmeldenummer: 16766570.2
(22) Anmeldetag: 19.09.2016
(51) Int. Cl.: F16H 61/00, B60T 10/02, B60T 1/087, F16D 57/04

(54) **ÖLVERSORGUNG EINES AUTOMATGETRIEBES ODER AUTOMATISIERTEN SCHALTGETRIEBES, IN EINEM ANTRIEBSSTRANG**
OIL SUPPLY SYSTEM OF AN AUTOMATIC TRANSMISSION OR AUTOMATED MANUAL TRANSMISSION IN A POWERTRAIN
ALIMENTATION EN HUILE D'UNE TRANSMISSION AUTOMATIQUE OU D'UNE BOÎTE DE VITESSES AUTOMATISÉE DANS UNE CHAÎNE CINÉMATIQUE

(30) Priorität: 24.09.2015 DE 102015218358
(43) Veröffentlichungstag der Anmeldung: 01.08.2018
(73) Patentinhaber: Voith Patent GmbH, 89522 Heidenheim (DE)
(72) Erfinder: WURSTER, Christoph, 89173 Lonsee - Ettlenschieß (DE)
(74) Vertreter: Dr. Weitzel & Partner
(86) Internationale Anmeldenummer: PCT/EP2016/072115
(87) Internationale Veröffentlichungsnummer: WO 2017/050674

(56) Entgegenhaltungen:
- WO-A1-2015/105482
- DE-A1-102006 030 791
- DE-A1-102009 035 082
- Anonymous: "Reparaturanleitung ZF-EcoLife", ZF ZF, 1 January 2008 (2008-01-01), [retrieved on 2022-11-14]

## Beschreibung

Die vorliegende Erfindung betrifft eine Ölversorgung eines Automatgetriebes oder automatisierten Schaltgetriebes in einem Antriebsstrang sowie ein Verfahren zur Versorgung eines solchen Automatgetriebes oder automatisierten Schaltgetriebes gemäß den unabhängigen Ansprüchen.

Ölversorgungen von Automatgetrieben oder automatisierten Schaltgetrieben weisen herkömmlich eine Ölpumpe in einer Ölversorgungsleitung auf, mittels welcher Öl aus einem Ölsumpf in eine Druckleitung zur Druckölversorgung von Elementen des Getriebes gefördert wird. Die Ölpumpe wird durch den Verbrennungsmotor angetrieben, mit welchem Antriebsleistung in einen Kraftfahrzeugantriebsstrang, in dem das Getriebe mit der Ölversorgung vorgesehen ist, um Antriebsleistung des Verbrennungsmotors auf Antriebsräder des Kraftfahrzeugs zu übertragen, eingespeist wird. In der Regel ist die Ölpumpe im Getriebe positioniert. Eine solche Ölpumpe wird auch als mechanische Ölpumpe bezeichnet.

Zu den unterschiedlichen Elementen, die in einem Automatgetriebe oder automatisierten Schaltgetrieben vorhanden sind, zählen Kupplungen, Bremsen, ein Wandler, eine hydrodynamische Bremse (Retarder) sowie die Schmierstellen eines Getriebes. Die unterschiedlichen Elemente benötigen während des Fahrzeugbetriebs zu unterschiedlichen Zeitpunkten ein sehr unterschiedliches Ölvolumen mit sehr unterschiedlichen Öldrücken.

DE 10 2009 035 082 A offenbart einen Getriebeölkreislauf mit einer Ölpumpe, einem Wärmetauscher, einem hydrodynamischen Retarder, einem Retarderwärmetauscher, steuerbare Schaltventile und einem hydrodynamischen Wandler. Eine weitere Ölversorgung wird in der Reparaturanleitung ZF-ECOLIFE, Ausgabe 2008-01 der ZF Friedrichshafen AG gezeigt.

Für den sicheren und störungsfreien Betrieb eines Automatgetriebes oder automatisierten Schaltgetriebes ist es unter anderem wichtig, dass die Öltemperatur in bestimmten Grenzen bleibt.

Der vorliegenden Erfindung liegt die Aufgabe zugrunde, eine Ölversorgung für ein Automatgetriebe oder automatisierten Schaltgetriebe sowie ein Verfahren anzugeben, mit welcher eine erhöhte Betriebsicherheit erreicht wird.

Die erfindungsgemäße Aufgabe wird durch eine Ölversorgung und ein Verfahren mit den Merkmalen der unabhängigen Ansprüche gelöst. In den abhängigen Ansprüchen sind vorteilhafte und besonders zweckmäßige Ausgestaltungen der Erfindung angegeben.

Eine erfindungsgemäße Ölversorgung eines Automatgetriebes oder automatisierten Schaltgetriebes weist einen Ölsumpf und eine Druckleitung zur Druckölversorgung von Elementen des Getriebes auf. Bei den Elementen handelt es sich beispielsweise um Schaltelemente wie Kupplungen und/oder Bremsen, insbesondere in Lamellenbauart, die betätigt werden, um wahlweise eine von mehreren möglichen Übersetzungen zwischen einer Getriebeeingangswelle und einer Getriebeausgangswelle des Getriebes einzustellen, wodurch einzelne Gangstufen in dem Getriebe dargestellt werden können.

Weiterhin werden mit dem Öl der Ölversorgung Elemente wie ein hydrodynamischer Wandler, eine hydrodynamische Bremse, Retarder und die Schmierung z.B der Lager versorgt bzw. betrieben. Insbesondere wird das Öl der Ölversorgung als Arbeitsmedium für den Wandler und den Retarder verwendet.

Ferner ist eine Pumpvorrichtung vorgesehen, um Öl aus dem Ölsumpf auf einen Versorgungsdruck P₀ in die Druckleitung zu fördern. Die Pumpvorrichtung ist in einer Ölleitung positioniert, welche in die Druckleitung übergeht oder durch welche die Druckleitung gebildet wird.

Die Pumpvorrichtung kann aus einer mit dem Antriebsmotor gekoppelten Ölpumpe oder alternativ aus einer mit einem elektrischen Motor angetriebenen Ölpumpe oder einer Kombination aus Beiden bestehen.

Zu den Elementen der Ölversorgung gehört weiterhin ein hydrodynamischer Wandler als Anfahrelement, der einen Teilabschnitt der Druckleitung bildet, und ein hydrodynamischer Retarder in einem Retarderölkreislauf.

In der Druckleitung sind zumindest ein erstes Schaltventil, ein zweites Schaltventil und ein Wärmetauscher vorgesehen, wobei der Wärmetauscher mittels der Schaltventile wahlweise als Teilabschnitt in die Druckleitung oder den Retarderölkreislauf schaltbar ist. Die Schaltventile sind vorzugsweise Federrückstellend und können einzeln oder zusammen über ein Betätigungsventil angesteuert werden.

Erfindungsgemäß ist ein Temperatursensor in Strömungsrichtung hinter der Pumpvorrichtung vorgesehen, um die Öltemperatur in der Druckleitung zu erfassen.

Durch diese Positionierung des Temperatursensors können insbesondere kritische Temperaturen in der Druckleitung erfasst werden. Zur weiteren Verbesserung der Betriebssicherheit ist der Temperatursensor in Strömungsrichtung gesehen hinter dem hydrodynamischen Wandler vorgesehen.

Die Position des Temperatursensors ist zwischen dem ersten Ventil und dem Wärmetauscher. Ein hier positionierter Temperatursensor kann insbesondere zur Regelung des Wandlers und des Retarders verwendet werden. Steigt die Öltemperatur an dieser Position der Druckleitung zu stark, ist es erforderlich in die Regelung von Wandler oder Retarder einzugreifen, um eine Überhitzung des Ölkreislaufes zu verhindern.

Weiterhin können Ventile in der Druckleitung vorgesehen sein, mittels denen in Teilabschnitten der Druckleitung der Versorgungsdruck P₀, in Strömungsrichtung gesehen, auf unterschiedlichen Arbeitsdrück P₁, P₂, P₃ ,regelbar ist, wobei gilt P₀ > P₁ > P₂ > P₃.

In einer weiteren Ausführung kann ein zweiter Temperatursensor zur Messung der Ölsumpftemperatur vorhanden sein, wodurch die Regelung des Getriebes weiter verbessert wird, da das gesamte Ölvolumen berücksichtigt wird.

Ein erfindungsgemäßes Verfahren sieht vor, dass unabhängig vom Betriebszustand des Kraftfahrzeugantriebsstrangs die Öltemperatur in der Druckleitung gemessen wird, wobei weiterhin vorgesehen ist,
- im Lock-Up Betrieb: die Ermittlung der Ölsumpftemperatur;
- im Wandlerbetrieb: Reduzierung der Getriebeeingangsleitung bei Überschreitung einer ersten Temperaturgrenze T_{max W};
- im Retarderbetrieb, bzw. im Bremsbetrieb: Reduzierung der Retarderleistung bei Überschreitung einer zweiten Temperaturgrenze T_{max R};

Zu den Betriebszustände zählen hauptsächlich der Anfahrbetrieb mit Wandler, der Fahrbetrieb mit überbrücktem Wandler, Lock-Up-Betrieb und der Bremsbetrieb, aber auch die Betriebszustände der anderen Aggregate des Antriebstrangs wie dem Motor usw. zählen dazu.

Weiterhin kann vorgesehen sein, dass die erste Temperaturgrenze T_{max W} und die zweite Temperaturgrenze T_{max R} an den Betriebszustand des Antriebsstrangs angepasst wird.

So kann in einem weiteren Schritt die Ölsumpftemperatur mittels eines Berechnungsmodels ermittelt werden, so dass ein zweiter Temperatursensor zur Messung der Ölsumpftemperatur entfallen kann.

Um die Ölsumpftemperaturermittlung zu verbessern, kann weiterhin das Berechnungsmodel in dem Zeitfenster abgeglichen werden, in dem der Wandler im Loch-Up Betrieb arbeitet und der Wärmetauscher mittels der Ventile in die Druckleitung geschaltet ist. In diesem Betriebszustand wird das Öl durch die Elemente nur geringfügig erwärmt.

Nachfolgend wird die Erfindung anhand von Skizzen näher erläutert.

In diesen zeigen:
- Figur 1: einen Ausschnitt einer Ölversorgung eines Getriebes mit Temperatursensor,
- Figur 2: ein Beispiel für eine Ausführung einer Ölversorgung eines Getriebes;

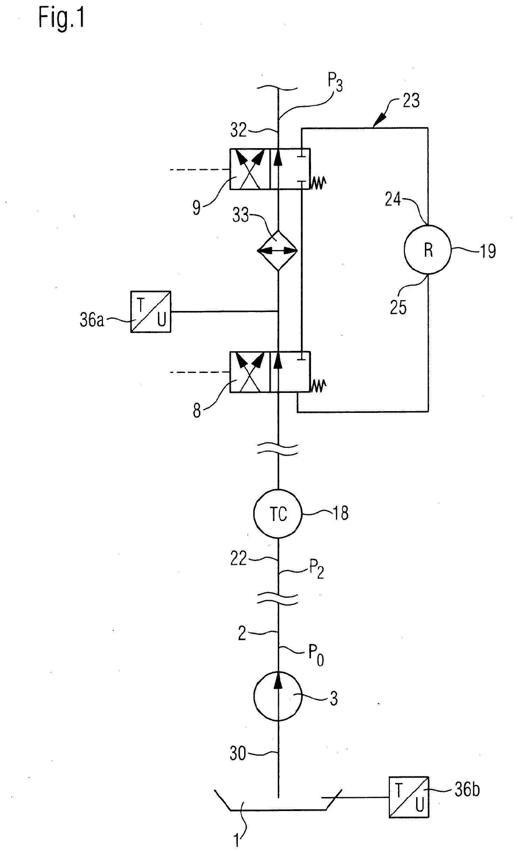

In Figur 1 ist ein Ausschnitt einer Ölversorgung eines Getriebes dargestellt, aus der eine besonders vorteilhafte Position des Temperatursensors 36a hervorgeht.

Der Teilausschnitt zeigt alle wesentlichen Elemente die eine erfindungsgemäße Ölversorgung für ein Automatgetriebe oder ein automatisches Schaltgetriebe aufweisen muss.

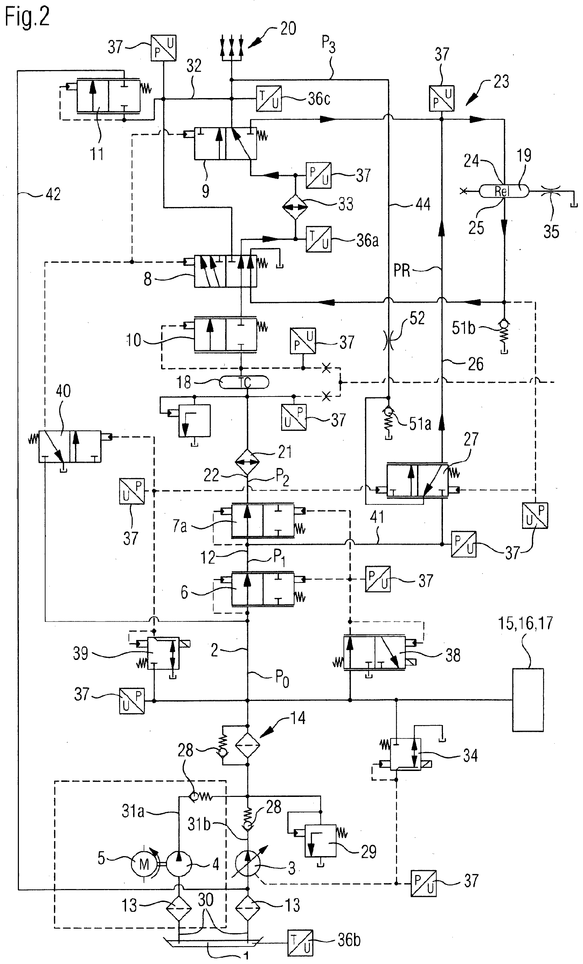

Nicht dargestellte Details, wie Ventile zur Druckregelung oder zum Schalten oder Regeln der Elemente können Beispielhaft aus Fig 2 entnommen werden. In Figur 2 ist ein Ausführungsbeispiel dargestellt, aus dem alle Details hervorgehen, die nachfolgend auch noch beschrieben werden.

Zur Ölversorgung ist eine Ölpumpvorrichtung 3 vorgesehen, mittels der Öl über eine Ölleitung 30 in die Druckleitung 2, 12, 22, 32 gefördert bzw. gepumpt wird. Der Öldruck wird so geregelt, dass im Druckleitungsabschnitt 2 ein Versorgungsdruck P₀ vorliegt, der von einem nicht dargestellten Ventil geregelt wird. Der Versorgungsdruck P₀ wird beispielsweise zur Schaltung der Kupplungen und Bremsen eines Getriebes benötigt, um die Schaltvorgänge im Getriebe zu steuern bzw. zu regeln.

Im weiteren Verlauf der Druckleitung 2, 12, 22, 32 ist der hydrodynamische Wandler 18 in der Druckleitung 22 angeordnet. In diesem Abschnitt der Druckleitung ist der Öldruck geringer, P₂<P₀. Der Wandler wird in jedem Betriebszustand von Öl durchströmt.

Im nächsten dargestellten Abschnitt sind unter anderem der Wärmetauscher 33 und der Retarderölkreislauf 23 dargestellt. Die Ventile 8 und 9 sind als 4/2 Wegeventile ausgeführt. Durch das Schalten der Ventile 8 und 9 ist der Wärmetauscher 33 entweder ein Teilabschnitt der Druckleitung oder der Wärmetauscher ist in den Retarderölkreislauf 23 integriert, so dass im Betrieb des Retarders die Bremsenergie über den Wärmetauscher abgeführt wird.

Der Temperatursensor 36a ist zwischen dem Ventil 8 und dem Wärmetauscher 33 installiert. So kann in beiden Schaltstellungen der Ventile 8, 9 die Öltemperatur des Öls entweder am Ausgang von Wandler 18 oder Retarder 19 gemessen werden. Zur Optimierung des Betriebs von Wandler 18 und Retarder 19 können unterschiedliche Temperaturgrenzen maßgeblich sein. Wird die Maximaltemperatur überschritten muss der Wandler 18 oder der Retarder 19 heruntergeregelt werden. Die Position des Sensors vor dem Wärmetauscher 33 gewährleistet eine optimale Temperaturüberwachung, da die tatsächliche Prozesstemperatur gemessen wird.

Die Öltemperatur im Ölsumpf ist dagegen nur bei häufigem an- und abschalten des Retarders relevant, da dabei relativ viel erhitztes Öl aus dem Arbeitsraum in den Ölsumpf 1 abgeführt wird.

Im Lock-Up Betrieb wird das Öl im Wandler nur unwesentlich erhitzt, so dass im Lock-Up Betrieb die gemessene Temperatur am Sensor 36a annähernd der Ölsumpftemperatur entspricht. Die gemessene Temperatur kann in ein Berechnungsmodell einfließen um auch im Wandler- oder Retarderbetrieb eine Ölsumpftemperatur zu berechnen.

Figur 2 zeigt ein Ausführungsbeispiel für eine Ölversorgung eines Getriebes mit allen Elementen, insbesondere Wandler 18, Retarder 19. und die Schmierstellen 20.

Von dem Druckleitungsabschnitt 2 zweigt die Ölversorgung für die Schaltelemente 17 ab, wobei die einzelnen Schaltelemente 17 über Leitungen 16 und die Schalt- und Steuerventile 15 mit Drucköl versorgt werden. Die hier nicht näher dargestellten Schaltelemente 7 können Kupplungen oder Bremsen sein, deren Betätigung mit dem Drucköl erfolgt.

Zur Ölversorgung sind hier zwei Pumpen 3 und 4 vorgesehen. Dabei ist Pumpe 3 an den Antriebsmotor gekoppelt und als regelbare Pumpe ausgeführt. Die Pumpe 4 ist über einen elektrischen Motor 5 angetrieben. Die Verschaltung und Regelung der beiden Ölpumpen 3, 4 können unterschiedlich ausgeführt sein, wobei bei jeder Schaltung sichergestellt ist, dass vor dem Ventil 6 ein Versorgungsdruck P₀ einstellbar ist und hinter dem Ventil 6 immer ein Ölvolumenstrom durch die Druckleitung 2, 12, 22, 32 und die Ventile 7, 8, 9, 10 bis zu den Schmierstellen 20 gelangen kann.

Überschüssiges Drucköl, welches nicht für die Schmierung 20 benötigt wird, kann über die Bypassleitung 42 zurück auf die Ansaugseite der ersten Ölpumpe 3 geleitet werden.

In den beiden dargestellten Ausführungen ist weiterhin in der Druckleitung 2, 12, 22, 32 ein hydrodynamischer Wandler 18 als Anfahrelement vorgesehen, der mit Drucköl durchströmt bzw. versorgt wird. Zur Kühlung des Ölstroms sind zwei Wärmetauscher 21, 33 vorgesehen, wobei einer direkt in der Druckleitung 2, 12, 22, 32 vor dem Wandler 18 positioniert ist. Ein weiterer Wärmetauscher 33 ist zwischen den Ventilen 8 und 9 angeordnet. Dieser kann entsprechend dem Betriebszustand des Antriebstrangs in den Retarderbetriebskreislauf 23, zur Abführung der Retarderabwärme, geschaltet werden.

Zur Befüllung des Retarderölkreislaufs 23 zweigt von der Druckleitung 2, 12, 22, 32 im Bereich des ersten Arbeitsdruckes P₁ eine Befüllleitung 26, 41 ab, über die der Retarder 19 mit Öl aus der Druckleitung 2, 12, 22, 32 versorgbar ist.

In der Ausführung ist neben dem Wärmetauscher 33 ein weiterer Wärmetauscher 21 vor dem Wandler 18 installiert. In diesem Wärmetauscher 21 wird das Öl gekühlt bevor es in den Wandler 18 gelangt.

Im Nicht-Bremsbetrieb des Retarders 19 sind immer beide Wärmetauscher 21, 33 in den Ölkreislauf eingebunden, sodass auch im Wandlerbetrieb möglichst wenig Wärme in den Ölsumpf 1 eingebracht wird bzw. um das Öl aus dem Ölsumpf 1 möglichst schnell herunter zu kühlen. Im Bremsbetrieb des Retarders 19 ist nur der Wärmetauscher 33 in den Retarderölkreislauf 23 eingebunden. Der Mindestölstrom wird nur über den Wärmetauscher 21 geleitet.

Weitere in der Figur 2 dargestellte Details bzw. Elemente sind Details, die für die Ölversorgung notwendig sind, aber nicht direkt für die erfindungsgemäße Ausführung relevant sind. Auf diese wurde hier nicht näher eingegangen, da sie dem Fachmann allgemein bekannt sind und die Funktion aus den Schaltbildern hervorgeht. Hierzu zählen insbesondere die Rückschlagventile 28, bzw. die Druckbegrenzungsventile 28.1, die Sensoren 36, 37, sowie die nicht erwähnten Ventile, Filter usw.

## Patentansprüche

1. Ölversorgung eines Automatgetriebes oder automatisierten Schaltgetriebes, geeignet zum Einbau in einem Antriebsstrang,
1.1 mit einem Ölsumpf (1);
1.2 mit einer Druckleitung (2, 12, 22, 32) zur Druckölversorgung von Elementen (17, 18, 19, 20) des Getriebes;
1.3 mit einer Pumpvorrichtung (3), um Öl aus dem Ölsumpf (1) auf einen Versorgungsdruck P0 in die Druckleitung (2, 12, 22, 32) zu fördern;
1.4 mit einem hydrodynamischen Wandler (18) als Anfahrelement, der einen Teilabschnitt der Druckleitung bildet;
1.5 mit einem hydrodynamischen Retarder (19), in einem Retarderölkreislauf (23)
1.6 mit in der Druckleitung (2, 12, 22, 32) zumindest einem ersten Schaltventil (8), einem zweiten Schaltventil (9) und einem zwischen dem ersten Schaltventil (8) und zweiten Schaltventil (9) angeordneten Wärmetauscher (33), wobei der Wärmetauscher (33) mittels der Schaltventile (8, 9) wahlweise als Teilabschnitt in die Druckleitung (2, 12, 22, 32) oder den Retarderölkreislauf (23) schaltbar ist;
**dadurch gekennzeichnet,**
1.7 dass ein Temperatursensor (36a) in Strömungsrichtung hinter der Pumpvorrichtung (3) vorgesehen ist, um die Öltemperatur in der Druckleitung (2, 12, 22, 32) zu erfassen, wobei
der Temperatursensor (36a) zwischen dem ersten Ventil (8) und dem Wärmetauscher (33) und in Abhängigkeit einer Schaltstellung der Schaltventile (8, 9) in Strömungsrichtung hinter dem hydrodynamischen Wandler (18) oder dem hydrodynamischen Retarder (19) zur Messung der Öltemperatur am Ausgang des hydrodynamischen Wandlers (18) oder des hydrodynamischen Retarders (19) angeordnet ist.

2. Ölversorgung gemäß Anspruch 1,
**dadurch gekennzeichnet,**
**dass** Ventile (6, 7, 10, 11, 27) in der Druckleitung (2, 12, 22, 32) vorgesehen sind, mittels denen in Teilabschnitten der Druckleitung (2, 12, 22, 32) der Versorgungsdruck P0, in Strömungsrichtung gesehen, auf unterschiedlichen Arbeitsdrücke P1, P2, P3 regelbar ist, wobei gilt P0 > P1 > P2 > P3

3. Ölversorgung gemäß Anspruch 1 oder 2,
**dadurch gekennzeichnet,**
**dass** ein zweiter Temperatursensor (36b) zur Messung der Ölsumpftemperatur vorhanden ist.

4. Verfahren zum Versorgen eines Automatgetriebes oder automatisierten Schaltgetriebes mit Drucköl mit einer Ölversorgung gemäß einem der Ansprüche 1 bis 3, mit folgenden Schritten:
- Messen der Öltemperatur mit dem Temperatursensor (36a) in der Druckleitung (2, 12, 22, 32);
- im Lock-Up Betrieb: Ermittlung der Ölsumpftemperatur;
- im Wandlerbetrieb: Reduzierung der Getriebeeingangsleistung bei Überschreitung einer ersten Temperaturgrenze T_{max W};
- im Retarderbetrieb bzw. im Bremsbetrieb: Reduzierung der Retarderleistung bei Überschreitung einer zweiten Temperaturgrenze T_{max R};

5. Verfahren gemäß Anspruch 4,
**dadurch gekennzeichnet,**
**dass** die erste Temperaturgrenze T_{max W} und die zweite Temperaturgrenze T_{max R} an den Betriebszustand des Antriebsstrangs anpassbar sind.

6. Verfahren gemäß Anspruch 4 oder 5,
**dadurch gekennzeichnet,**
**dass** die Ölsumpftemperatur mittels eines Berechnungsmodels ermittelt wird.

7. Verfahren gemäß Anspruch 6,
**dadurch gekennzeichnet,**
**dass** das Berechnungsmodel abgeglichen und ggf. korrigiert wird, wenn der Wandler im Lock-Up Betrieb arbeitet und der Wärmetauscher (33) mittels der Ventile (8, 9) in die Druckleitung geschaltet ist.

## Claims

1. Oil supply system of an automatic transmission or an automated manual transmission, suitable for installation in a powertrain,
1.1 having an oil pan (1);
1.2 having a pressure line (2, 12, 22, 32) for supplying elements (17, 18, 19, 20) of the transmission with pressurized oil;
1.3 having a pumping device (3) for pumping oil from the oil pan (1) into the pressure line (2, 12, 22, 32) at a supply pressure P₀;
1.4 having, as a starting element, a hydrodynamic converter (18), which forms a subsection of the pressure line;
1.5 having a hydrodynamic retarder (19) in a retarder oil circuit (23);
1.6 having within the pressure line (2, 12, 22, 32) at least a first switching valve (8), a second switching valve (9) and a heat exchanger (33) positioned between the first switching valve (8) and the second switching valve (9), wherein the heat exchanger (33) is selectively switchable, by means of the switching valves (8, 9), as a subsection into the pressure line (2, 12, 22, 32) or the retarder oil circuit (23);
characterized
1.7 in that a temperature sensor (36a) is provided after the pumping device (3) in the direction of flow in order to detect the oil temperature in the pressure line (2, 12, 22, 32), wherein
the temperature sensor (36a) is arranged between the first valve (8) and the heat exchanger (33) and dependent on a switching state of the switching valves (8,9) in flow direction behind the hydrodynamic converter (18) or the hydrodynamic retarder (19) for measurement of the oil temperature at the output of the hydrodynamic converter (18) or the hydrodynamic retarder (19).

2. Oil supply system according to Claim 1,
**characterized**
**in that** valves (6, 7, 10, 11, 27) are provided in the pressure line (2, 12, 22, 32), by means of which valves the supply pressure P₀, viewed in the direction of flow, can be adjusted to different working pressures P₁, P₂ , P₃, wherein P₀ > P₁ > P₂ > P₃, in subsections of the pressure line (2, 12, 22, 32).

3. Oil supply system according to Claim 1 or 2,
**characterized**
**in that** a second temperature sensor (36b) is present to measure the oil pan temperature.

4. Method for supplying an automatic transmission or an automated manual transmission with pressurized oil, having an oil supply system according to one of Claims 1 to 3, comprising the following steps:
- measuring the oil temperature by means of a temperature sensor (36a) in the pressure line (2, 12, 22, 32);
- in the lockup mode: determining the oil pan temperature;
- in the converter mode: reducing the transmission input power when a first temperature limit T_{max W} is exceeded;
- in the retarder mode or in the braking mode: reducing the retarder power when a second temperature limit T_{max R} is exceeded.

5. Method according to Claim 4,
**characterized**
**in that** the first temperature limit T_{max W} and the second temperature limit T_{max R} can be adapted to the operating state of the powertrain.

6. Method according to Claim 4 or 5,
**characterized**
**in that** the oil pan temperature is determined by means of a calculation model.

7. Method according to Claim 6,
**characterized**
**in that** the calculation model is calibrated and optionally corrected when the converter is operating in the lockup mode and the heat exchanger (33) is connected into the pressure line by means of the valves (8, 9).

## Revendications

1. Alimentation en huile d'une transmission automatique ou d'une boîte de vitesses automatisée, adaptée pour une intégration dans une chaîne cinématique :
1.1 avec un puisard d'huile (1) ;
1.2 avec une conduite de pression (2, 12, 22, 32) pour l'alimentation en huile sous pression d'éléments (17, 18, 19, 20) de la transmission ;
1.3 avec un dispositif de pompage (3), pour acheminer de l'huile hors du puisard d'huile (1) à une pression d'alimentation P₀ dans la conduite de pression (2, 12, 22, 32) ;
1.4 avec un convertisseur hydrodynamique (18) servant d'élément de démarrage et formant une section partielle de la conduite de pression ;
1.5 avec un retardateur hydrodynamique (19) dans un circuit d'huile de retardateur (23) ;
1.6 avec, dans la conduite de pression (2, 12, 22, 32), au moins une première soupape de commutation (8), une deuxième soupape de commutation (9) et un échangeur thermique (33) disposé entre la première soupape de commutation (8) et la deuxième soupape de commutation (9), l'échangeur thermique (33) pouvant être raccordé à l'aide des soupapes de commutation (8, 9) au choix sous la forme d'une section partielle dans la conduite de pression (2, 12, 22, 32) ou dans le circuit d'huile de retardateur (23) ;
**caractérisée en ce que** :
1.7 un capteur de température (36a) est prévu derrière le dispositif de pompage (3) dans la direction d'écoulement, pour détecter la température de l'huile dans la conduite de pression (2, 12, 22, 32),
le capteur de température (36a) étant disposé entre la première soupape (8) et l'échangeur thermique (33) et, selon la position de commutation des soupapes de commutation (8, 9), en aval du convertisseur hydrodynamique (18) ou du retardateur hydrodynamique (19) dans le sens d'écoulement, afin de mesurer la température de l'huile à la sortie du convertisseur hydrodynamique (18) ou du retardateur hydrodynamique (19).

2. Alimentation en huile selon la revendication 1, **caractérisée en ce que** des soupapes (6, 7, 10, 11, 27) sont prévues dans la conduite de pression (2, 12, 22, 32), ces soupapes servant à réguler la pression d'alimentation P₀, vue dans la direction d'écoulement, à différentes pressions de travail P₁, P₂, P₃, dans les sections partielles de la conduite de pression (2, 12, 22, 32), pour P₀ > P₁ > P₂ > P₃.

3. Alimentation en huile selon la revendication 1 ou 2, **caractérisée en ce qu'**un deuxième capteur de température (36b) est présent pour mesurer la température du puisard d'huile.

4. Procédé d'alimentation d'une transmission automatique ou d'une boîte de vitesses automatisée en huile sous pression, avec une alimentation en huile selon l'une quelconque des revendications 1 à 3, avec les étapes suivantes :
- mesure de la température de l'huile à l'aide du capteur de température (36a) placé dans la conduite de pression (2, 12, 22, 32) ;
- en mode verrouillage : détermination de la température du puisard d'huile ;
- en mode convertisseur : réduction de la puissance d'entrée de la transmission en cas de dépassement d'une première limite de température T_{maxW} ;
- en mode retardateur et/ou en mode frein : réduction de la puissance du retardateur en cas de dépassement d'une deuxième limite de température T_{maxR}.

5. Procédé selon la revendication 4, **caractérisé en ce que** la première limite de température T_{maxW} et la deuxième limite de température T_{maxR} peuvent être adaptées au mode d'utilisation de la chaîne cinématique.

6. Procédé selon la revendication 4 ou 5, **caractérisé en ce que** la température du puisard d'huile est déterminée à l'aide d'un modèle de calcul.

7. Procédé selon la revendication 6, **caractérisé en ce que** le modèle de calcul est étalonné et le cas échéant corrigé lorsque le convertisseur fonctionne en mode verrouillage et que l'échangeur thermique (33) est raccordé dans la conduite de pression au moyen des soupapes (8, 9).
